# EUROPEAN PATENT APPLICATION

(11) **EP 1 713 159 A1**
(43) Date of publication of application: **18.10.2006**
(21) Application number: 05425208.5
(22) Date of filing: 11.04.2005
(51) Int. Cl.: H02K 5/128, H02K 5/167

(54) **Variable speed synchronous electric motor with rotor immersed in a fluid particularly for pumps**

(71) Applicant: Askoll Holding S.r.l., 36031 Povolaro di Dueville (Vicenza) (IT)
(72) Inventor: Marioni, Elio, 36031 Dueville (Vicenze) (IT)
(74) Representative: Botti, Mario

(57) **Abstract**

Variable speed synchronous electric motor (1), particularly for immersion pumps (2), of the type comprising a stator (5) external to a central permanent magnet rotor (7), contained in a sleeve (9), a shaft (13) being integral in rotation with the rotor (7) along an axis X and at least a bearing (14) housed in the sleeve (9) for supporting the shaft (13). The bearing (14) comprising a bushing (22) inserted in the sleeve (9) exhibiting a seat (23) for housing a bush (17) put on the shaft (13).

## Description

### Field of application

The present invention relates to a variable speed synchronous electric motor with rotor immersed in a fluid, particularly for pumps for domestic and industrial use.

In particular, the invention relates to a variable speed synchronous electric motor with rotor immersed in an fluid, particularly for pumps, of the type comprising a stator being external with respect to the central permanent magnet rotor contained in a sleeve, a shaft integral in rotation with the rotor along an axis X and at least a bearing housed in said sleeve for supporting the shaft.

### Prior art

As it is well known to the skilled in the art, pumps having motor with immersed rotor have been more and more realised during the last years by means of synchronous motors with permanent magnet rotors.

The used synchronous electric motors preferably exhibit a structure comprising an external stator, with relative pole shoes, and an internal rotor centrally arranged between the stator pole shoes.

The rotor is housed in a casing being tightly sealed with respect to the stator, for example inside a steel sleeve, and it is axially crossed by a driving shaft rotatably supported by suitable bearings.

The rotor generally works immersed in a fluid, which can be the same fluid wherein the pump is immersed or, if the rotor is contained in a tight sleeve, in a special fluid with particular thermo-physical characteristics.

The driving shaft also exhibits one end coupled with the operating element, i.e. the pump impeller or impellers.

Generally, the bearings comprise a bush in a material such as ceramic, graphite or technopolymers, within which the shaft is rotatably tied.

The main drawback found in motors with bearings of this type is that of particular tensions and stresses which appear in correspondence with the bearings during the motor operation when, for a faulty assembly or for a bad shaft support, the shaft and the bearings are not perfectly coaxial.

A misalignment of the driving shaft causes a concentration of strains on small surfaces of the bearings which can cause malfunctions of the rotor, a reduction of the operative life of the bearings up to the motor breakage.

A precise alignment between the shaft and the rotor is also constantly required for avoiding the onset of vibrations which generate a bothersome noise during the pump operation.

For trying to reduce such drawbacks, mounting the bearings on soft elastic supports is suggested to allow a possible recovery of the coaxiality errors induced in the rotary ensemble with respect to the sleeve ideal axis. The elastic supports allow to reduce, to a certain extent, the drawback of the misalignment supporting the strain, tensions and stresses which appear during the operation, on slightly wider surfaces.

State-of-the-art solutions of the known technique are either two expensive, remarkably affecting on the pump overall cost, or are not suitable for the performances required by this class of products.

The technical problem underlying the present invention is that of devising a variable speed synchronous electric motor with rotor immersed in a fluid, particularly for pumps for domestic and industrial use, having such structural and functional characteristics as to overcome the drawbacks cited in the known technique, with a particular simplicity of components.

### Summary of the invention

The solution idea underlying the present invention is that of providing at least a bearing of the driving shaft comprising a spherical bush put on the driving shaft and housed in a conjugated seat inside a bushing.

On the basis of such solution idea the technical problem is solved by a variable speed synchronous electric motor of the type previously indicated and defined by the characterising part of claim 1.

The further characteristics and advantages of the motor according to the present invention will be apparent from the following description of a preferred embodiment thereof given by way of indicative and non limiting example with reference to the annexed drawings.

### Brief description of the drawings

In such drawings:
Figure 1 shows a longitudinal section view of an immersion pump;
Figure 2 shows a three-quarter exploded schematic view of a pump bearing realised according to the present invention;
Figure 3 shows a three-quarter schematic view, partially sectioned, of the bearing of figure 2;
Figure 4 shows an axial section of the bearing represented in figure 3.

### Detailed description

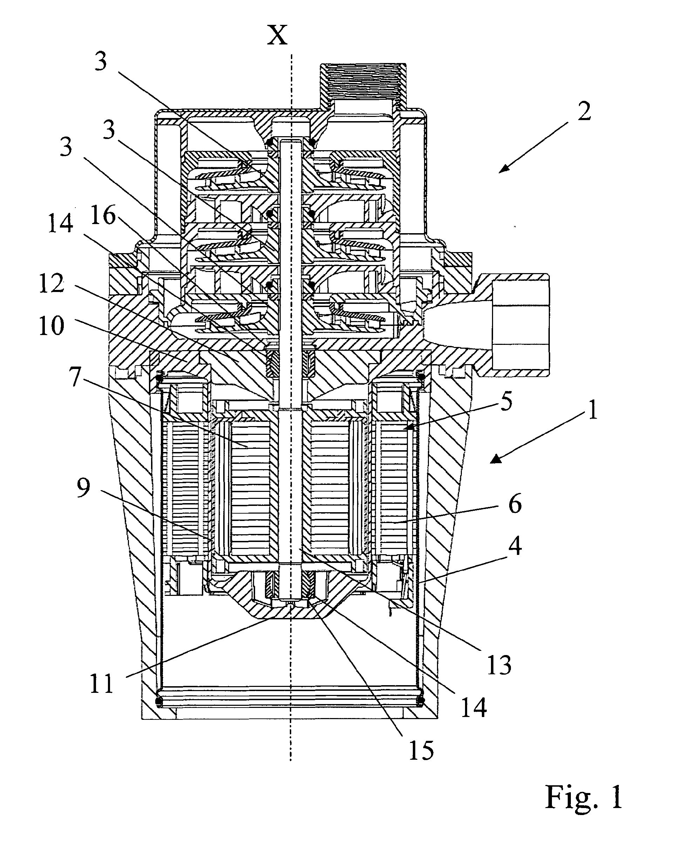

With reference to the annexed figures and in particular to the example of figure 1, 1 globally and schematically indicates a variable speed synchronous electric motor, with permanent magnet rotor immersed in a fluid, for a pump 2 mainly employed in domestic and industrial applications.

The motor 1 is aimed at activating the operating element, i.e. one or more impellers 3, of the pump 2 arranged in succession or in axial extension along an axis X. In the case represented in figure 1, the impellers 3 are three.

The motor 1 is housed inside a casing 4 and it comprises a stator 5, with relative statoric windings 6 apt to define corresponding pole shoes.

The motor 1 also comprises a permanent magnet rotor 7 axially housed inside a casing 8 tightly sealed with respect to the stator 5 (però è un errore nel testo ita).

More in particular, the rotor 7 is housed in a containing sleeve 9, arranged inside the stator 5 among the statoric windings 6, and it is formed integrally with a flange portion 10 which surmounts the stator 5 with a shape coupling.

The sleeve 9 comprises a bottom 11 and a lid 12 which define a seat closed for the rotor 7.

The rotor 7 operates immersed in a fluid, which can be the same fluid as that wherein the pump is immersed, or a special fluid with particular thermo-physical characteristics and in such case the sleeve 9 defines a seat being tight for the rotor 7 and of containment for the fluid.

A shaft 13 of the motor 1 is integral with the rotor 7 and it is kinematically and axially coupled along the axis X with the impellers 3 of the pump 2, in a per se conventional way.

The shaft 13 is supported by means of bearings 14 placed at opposite parts and housed in suitable seats 15, 16 respectively made on the bottom 11 and in the lid 12 of the containing sleeve 9 of the rotor 7.

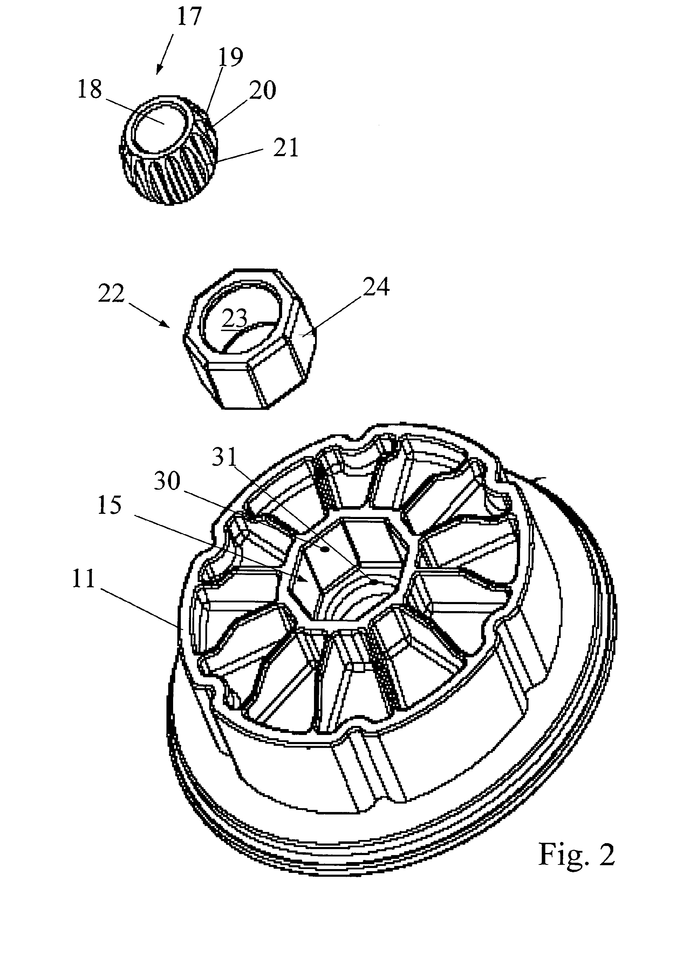

Advantageously, each bearing 14, as highlighted in figure 2, comprises a prismatic bushing 22, which, preferably, exhibits an external octagonal shape 24 which can be inserted in the counter-shaped seat 15 or 16.

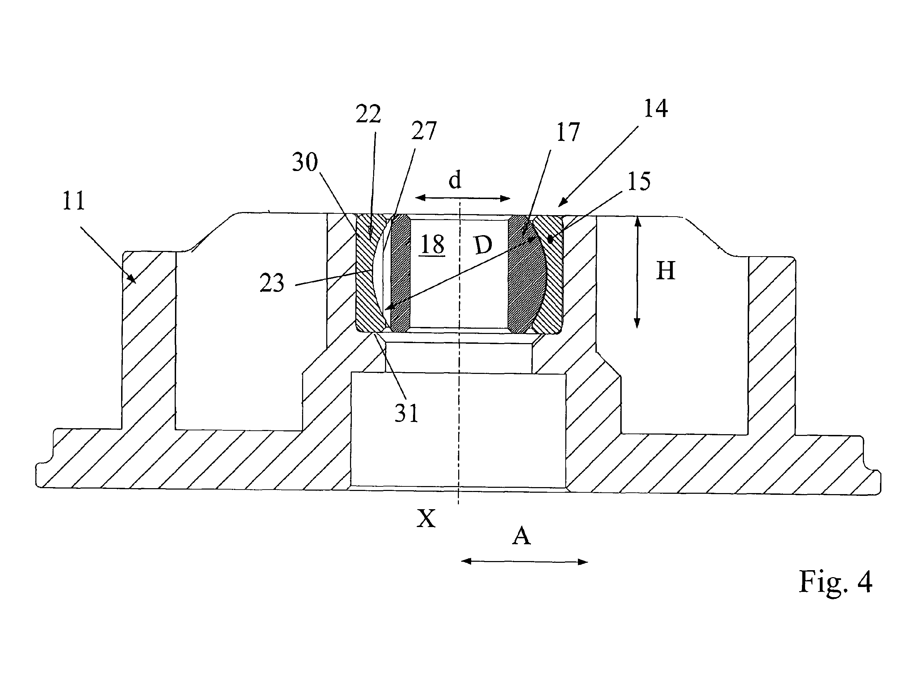

The seats 15, 16 preferably exhibit side walls 30 and bottom walls 31, apt to suitably contain the bushing 22, as highlighted in figures 2 and 4. In particular, the side walls 30 exhibit an octagonal plan shape.

Advantageously, the bushing 22 is hollow to realise an axial seat 23 for housing a spherical bush 17.

Preferably, the bushing 22 is realised in elastically deformable material, such as for example in polyurethanic techno-polymer, of suitable and predetermined shore hardness, in natural or synthetic rubber.

Advantageously, the bush 17 is put on the driving shaft 13.

In fact, the bush 17 has an axial hole 18, suitable to house the through-shaft 13.

Suitably, the bush 17 exhibits an external surface 19 preferably cask-like shaped and equipped with a plurality of axial grooves 20, among which plural fins 21 are defined.

The bush 17 is preferably made of graphite, ceramic or technopolymeric material suitably loaded.

Advantageously, the bushing 22, being elastically deformable, is shaped in such a way as to allow the insertion by pressure of the bush 17 in the counter-shaped spherical seat 23.

In such a way, the plurality of grooves 20, among the plural fins 21 of the bush 17, forms, with the seat 23 of the bushing 22, a plurality of axial passages 27.

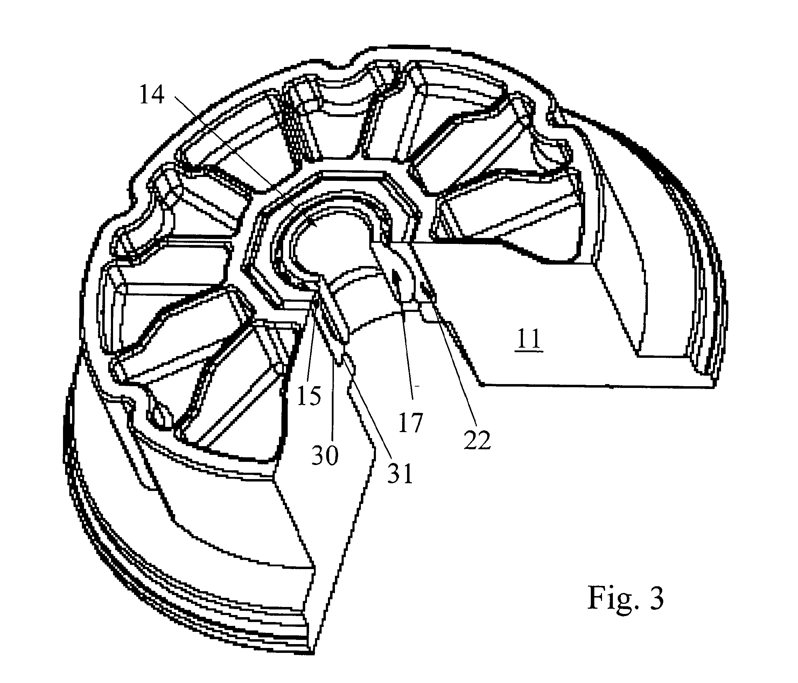

Advantageously, according to the present embodiment, in the assembling step, as particularly highlighted in figures 3 and 4, each bush 17 is inserted by pressure in the respective seat 23 of the bushing 22, thus defining a bearing 14 which can be inserted in the seat 15, 16 realised on the containment sleeve 9 of the rotor 7.

The seats 15 and 16 thus exhibit for the bushing 22 an anti-rotation function with respect to the sleeve 9.

Each bearing 14, put on the driving shaft 13, defines, with the shaft 13 itself, a rolling pair which serves as support for the rotor 7.

Obviously, the bottom 11 and the lid 12 of the containment sleeve 9 of the rotor 7 can be realised according to different shapes and in particular they can be realised integrally with the respective seats 15, 16 or by means of separate components.

The bearing 14, realised according to the present invention, is self-aligning for the shaft 13, in fact, the shape of the external cask-like surface 19 of the bush 17 inserted in the conjugated seat 23 of the bushing 22, being elastically deformable, allows to recover possible misalignments of the driving shaft 13 during the operation.

Moreover, the strain of the tensions and of the stresses which appear during the operation of the motor 1, in the case of a misalignment of the shaft 13, is supported by a remarkably wider surface, comprising the whole plural fins 21 of the bush 17, which ensures the self-alignment of the motor driving shaft without jeopardising its operation.

Furthermore, during the operation of the pump 2 with motor 1 having rotor 7 immersed in the fluid, the plurality of passages 27, defined among the plurality of grooves 20 of the bush 17 and the seat 23, of the bushing 22, allows the passage of the fluid wherein the rotor 7 is immersed allowing to cool and lubricate the bearing 14 itself.

Suitably, in a preferred embodiment, the bushing 22 exhibits the external octagonal shape 24 with apothem A, preferably equal to 10.6 mm, whereas the spherical seat 23 and the external surface 19 of the bush 17 exhibit a diameter being substantially identical to D, preferably equal to 18 mm. The bushing 22 and the bush 17 exhibit an axial height H substantially identical and preferably equal to 12 mm. The bush 17 exhibits the hole 18 with diameter d, preferably equal to 10 mm and corresponding to the diameter of the shaft 13. The grooves are preferably 15 in number and they exhibit a depth of 2 mm. Main advantage of the present invention is that of having realised a synchronous electric motor comprising at least one bearing having simple but efficient components, which, thanks to a particular cask-like shape of the bush inserted in the bushing, being elastically deformable, allows to obtain the self-alignment of the rotor even under burdensome operative conditions without jeopardising the operation.

A further advantage of the motor with the bearing realised according to the present invention is due to the possibility of recovering possible misalignments of the shaft during the pump operation offering a particularly silent operation, the elastically deformable bushing allows, in fact, to dampen bothersome vibrations and the derived noises.

Another advantage of the bearing realised according to the present invention is due to the simple components and to the bush easy assembling in the elastically deformable bushing, which also ensures a long lasting bearing.

Another remarkable advantage of the motor with at least one bearing realised according to the present invention is due to the constant cooling ensured by the liquid passage, wherein the rotor is immersed, within the plurality of passages defined between the plurality of the bush grooves and the bushing seat, allowing a continuous lubrication of the bearing.

Moreover, a bearing realised according to the present invention is advantageously used also in motors wherein the rotor winding sleeve is manufactured in thermoplastic material. The use of such materials, although exhibiting the value of being realised at low cost as well as that of avoiding the set on of bothersome parasite currents induced onto the sleeve by the rotoric/statoric magnetic fields, have the drawback of a lower dimensional stability when the temperature increases. A bearing, according to the present invention, allows to maintain the alignment of the driving shaft also in case of dimensional instability of the sleeve.

Furthermore, bearings realised according to the present invention, allow in the case of variable speed motors for the presence of the elastically deformable bushing to avoid the set on of structural resonance which could arise between the rotor and the sleeve, in steel, when the rotation speed approaches the natural critical frequencies of such components.

Another advantage of the present invention is linked to the extremely reduced cost and to the simple realisation the bearing realised according to the present invention exhibits.

## Claims

1. Variable speed synchronous electric motor with rotor (7) immersed in a fluid particularly for pumps (2), of the type comprising a stator (5) external with respect to said central permanent magnet rotor (7), contained in a sleeve (9), a shaft (13) integral in rotation with said rotor (7) along an axis X and at least one bearing (14) housed in said sleeve (9) for supporting said shaft (13), **characterised in that** said at least one bearing (14) comprises a bushing (22) inserted in said sleeve (9) exhibiting a seat (23) for housing a bush (17) put on said shaft (13).

2. Electric motor according to claim 1 **characterised in that** said bush (17) is spherical with an external surface (19) preferably cask-like shaped.

3. Electric motor according to claim 2, **characterised in that** said bush (17) exhibits, on said external surface (19), a plurality of axial grooves (20) between which plural fins (21) are defined.

4. Motor according to claim 3, **characterised in that** said seat (23) of said bushing (22) exhibits a spherical shape conjugated with said external surface (19) of said bush (17).

5. Motor according to claim 4, **characterised in that** said bushing (22) has a prismatic external shape (24) preferably octagonal.

6. Motor according to claim 4, **characterised in that** said plurality of grooves (20) of said bush (17) forms, with said seat (23) of said bushing (22), a plurality of axial passages (27).

7. Motor according to one or more of the preceding claims, **characterised in that** said bush (17) is realised in material such as graphite, ceramic or technopolymer material of predetermined hardness.

8. Motor according to one or more of the preceding claims, **characterised in that** said bushing (22) is realised in elastically deformable material, in polyurethanic polymer of predetermined hardness, in natural or synthetic rubber.

9. Motor according to one or more of the preceding claims, **characterised in that** said bearing (14) is housed in a seat (15, 16) made respectively on a bottom (11) or in a lid (12) of said containment sleeve (9) of said rotor (7), each one of said seats (15, 16) being conjugated with said external shape (24) of said bushing (22).

10. Motor according to claim 9, **characterised in that** each one of said seats (15, 16) of said sleeve (9) exhibits side walls (30) and bottom walls (31) suitable to contain said bushing (22), said side walls (30) exhibiting an octagonal plan shape conjugated with said external shape (24).

11. Motor according to one or more of the preceding claims, **characterised in that** said bushing (22) exhibits said external octagonal shape (24) with an apothem A preferably equal to 10,6 mm, **in that** said spherical seat (23) and said external surface (19) of said bush (17) exhibit a diameter identical to D, preferably equal to 18 mm.

12. Motor according to the preceding claim, **characterised in that** said bush (17) and said bushing (22) exhibit an axial height (H) substantially identical and preferably equal to 12 mm and **in that** said bushing (22) allows the axial insertion by pressure of said bush (17) in said seat (23) and **in that** said bush (17) exhibits said hole (18) with diameter (d) preferably equal to 10 mm and corresponding to the diameter of said shaft (13) with said grooves (20) preferably in number equal to 20 exhibiting a depth of 2 mm.
